# EUROPEAN PATENT SPECIFICATION

(11) **EP 1 869 131 B1**
(45) Date of publication and mention of the grant of the patent: **13.08.2008**
(21) Application number: 06727543.8
(22) Date of filing: 11.04.2006
(51) Int. Cl.: C09D 4/06, C08G 18/42, C09D 175/14

(54) **PAINT COMPOSITION, A PAINTING AND FINISHING METHOD, AND PAINTED ARTICLES**
FARBZUSAMMENSETZUNG, ANSTREICH- UND FERTIGUNGSVERFAHREN SOWIE ANGESTRICHENE ARTIKEL
COMPOSITION DE PEINTURE, PROCEDE DE MISE EN PEINTURE ET DE FINITION ET ARTICLES PEINTS

(30) Priority: 13.04.2005 JP 2005116327
(43) Date of publication of application: 26.12.2007
(73) Proprietor: BASF Coatings Japan Ltd., Yokohama 244-0815 (JP)
(72) Inventor: NIIMI, Rui, 48165 Münster (DE); TAGKAGI, Hiroyuki, Totsuka-ku, Yokohama 244-0815 (JP); TAKEHITO, Ito, Tokyo 192-0916 (JP); TAKEMOTO, Masayuki, Tsuduki-ku, Yokohama 224-0061 (JP); MITSUMUNE, Shinji, Fujisawa Kanagawa 251-0055 (JP); KONISHI, Tetsu, Kanagawa 238-0555 (JP)
(74) Representative: Hüsener, Susanne
(86) International application number: PCT/IB2006/001019
(87) International publication number: WO 2006/109179

(56) References cited:
- EP-A- 1 464 674
- US-A- 4 435 542
- US-A1- 2002 082 341
- US-A1- 2003 119 980

## Description

### [Technical field]

The present invention relates to a novel paint composition, painting and finishing method, and painted articles. More specifically, it relates to a paint composition with excellent painting workability that affords a paint film of excellent acid rain resistance, contamination resistance, water resistance and weather resistance, which, when used in the field of automobile painting, affords a paint film of particularly excellent resistance to vehicle wash damage; and to a painting and finishing method, and to painted articles.

### [Background technology]

Paint compositions comprising hydroxyl group-containing acrylic resin and crosslinking agent having a functional group that reacts with hydroxyl groups are often used in the field of automobile painting. Conventionally, copolymers comprising hydroxyl group-containing radical polymerizable monomer and another radical polymerizable monomer are mainly used for the hydroxyl group-containing acrylic resin used in these paint compositions; recently, however, the field of automobile painting has encountered demand for paint, particularly topcoat paint, with acid rain resistance and vehicle wash damage resistance, and so there is a need for resins with a high hydroxyl value.

For example, hydroxyl group-containing resin obtained by the ester addition of C6-C8 2',2-dimethylol alkanoic acid and monoglycidyl alkanoate is known (see cited patent 1, for example). However, this hydroxyl group-containing resin is disadvantageous in that it has a low molecular weight for conversion to low solvent or no solvent systems, and when automobile paint comprising this resin as substrate resin is used, it is impossible to achieve adequate durability, and acid rain resistance and vehicle wash damage resistance are particularly unsatisfactory.

Also known is a high solids content paint composition that is a product of a carboxyl group-containing compound and an epoxy group-containing compound, and is characterized in that it has a weight average molecular weight no higher than 1000 and contains a hydroxyl group-containing compound of a hydroxyl value of from 200 to 800, a polyisocyanate compound, and melamine resin (see cited patent 2, for example). However, resin of a weight average molecular weight no higher than 1000 is disadvantageous in that with the wet-on-wet painting method using basecoat paint and topcoat paint commonly used as automobile paint, there is insufficient separation between the upper and lower layers, the paints intermingle at the interface, and the resulting paint film does not have a good external appearance. It is particularly unsatisfactory in terms of the recent demands for a high level of resistance to vehicle wash damage.

Generally, if the hydroxyl value of the resin is increased, the polarity of the resin increases, the miscibility with low polarity solvents decreases, and a high polarity solvent is required as a diluent; this situation is also disadvantageous, in that it results in decreased separation with the basecoat. Moreover, because the resin is highly polar, miscibility with the crosslinking agent decreases, resulting in a poor external appearance, the usable crosslinking agents become limited, and it is difficult to achieve both good external appearance and good performance. Furthermore, when the hydroxyl value of the resin is lowered in an attempt to overcome these problems, it is difficult to achieve satisfactory performance in terms of acid resistance, vehicle wash damage resistance, solvent resistance and the like. It is particularly unsatisfactory in terms of the recent demands for a high level of resistance to vehicle wash damage.

[Cited patent 1] Japanese unexamined patent 2003-055313 [Cited patent 2] Japanese unexamined patent 2002-348529

### [Disclosure of the invention]

### [Problem to be overcome by the invention]

The present invention is to provide a paint composition using hydroxyl group-containing resin, which has excellent painting workability and affords a paint film with an excellent external appearance, particularly in terms of the external appearance of the wet-on-wet painted basecoat, and excellent acid rain resistance, solvent resistance, water resistance and weather resistance, and particularly excellent resistance to vehicle wash damage; it is also to provide a painting and finishing method, and painted articles.

### [Means of overcoming the problem]

The present inventors conducted diligent research into overcoming the abovementioned problem, and discovered that this aim is achieved by a paint composition having as indispensable components a hydroxyl group-containing resin that is obtained by the addition and polymerization of a compound that contains one carboxyl group and does not have a radical polymerizable double bond, a lactone compound, an epoxy group-containing radical polymerizable monomer, and, if necessary, another radical polymerizable monomer, and a crosslinking agent containing functional groups that react with hydroxyl groups; they perfected the present invention based on this knowledge.

Specifically, the present invention provides a paint composition, characterized in that it has as indispensable components (A) a hydroxyl group-containing resin that is obtained by the addition and polymerization of (a) a compound that contains one carboxyl group and does not have a radical polymerizable double bond, (b) a lactone compound, and (c) an epoxy group-containing radical polymerizable monomer, and which has a resin hydroxyl value or from 180 to 400 mgKOH/g and a weight average molecular weight of from 2000 to 30,000, and in which the structural unit based on the lactone compound component (b) is from 20 to 60% by mass of the resin solids content; and (B) a crosslinking agent containing per molecule at least two functional groups that react with hydroxyl groups.

The present invention also provides an abovementioned paint composition where the hydroxyl group-containing resin is obtained by the addition and copolymerization of component (a), component (b), component (c), and another radical polymerizable monomer (d). The present invention also provides an abovementioned paint composition where the compound (a) that contains one carboxyl group and does not have a radical polymerizable double bond is 2,2-dimethylol butanoic acid or 2,2-dimethylol propionic acid. The present invention also provides an abovementioned paint composition where the crosslinking agent (B) is a melamine resin and/or isocyanate compound. Also, the present invention provides a painting and finishing method, characterized in that the abovementioned paint composition is applied as the topcoat paint; and it also provides painted articles that have been painted by the abovementioned painting and finishing method.

### [Advantages of the invention]

The inventive paint composition has excellent painting workability, and affords a paint film with an excellent external appearance, particularly of the wet-on-wet painted basecoat, and excellent acid rain resistance, solvent resistance, water resistance and weather resistance, and particularly excellent vehicle wash damage resistance. The painting and finishing method in which the inventive paint composition is used affords excellent external appearance, and the painted articles have excellent abovementioned paint film properties.

### [Optimum mode of the invention]

Specific examples of inventive hydroxyl group-containing resin component (a), which is a compound that contains one carboxyl group and does not have a radical polymerizable double bond, include monocarboxylic acids such as acetic acid, propionic acid, butyric acid, 2-ethylhexanoic acid, octanoic acid, dodecanoic acid, palmic acid, stearic acid, oleic acid, pivalic acid, versatic acid and benzoic acid, and oxy-acids such as dimethylol propionic acid, dimethylol butanoic acid and gluconic acid; compounds containing one carboxylic acid and two or more hydroxyl groups, preferably two or three hydroxyl groups, and particularly preferably two hydroxyl groups, such as 2,2-dimethylol propionic acid and 2,2-dimethylol butanoic acid, are preferred because they have excellent miscibility with crosslinking agents and afford low polarity resin with a high hydroxyl value. One type of component (a) may be used, or a combination of two or more types may be used.

The resin composition is bestowed with hydroxyl groups by subjecting this carboxyl group-containing compound that is component (a) to addition reaction with an epoxy group-containing radical polymerizable monomer that is component (c). This addition reaction between carboxyl group-containing compound component (a) and the epoxy group of component (c) may proceed before, during or after the polymerization of component (c) monomer and, if necessary, component (d) monomer. The amount of component (a) carboxyl group-containing compound depends on the amount of component (c) and the hydroxyl value of the resin, and is preferably such that the molar ratio with respect to the component (c) epoxy group is less than 1.2. If the amount of component (a) carboxyl groups exceeds a molar ratio of 1.2 with respect to the epoxy groups, unreacted carboxyl groups are deposited in the resin composition, which is undesirable. There are no particular limitations regarding the lower limit for the component (a) carboxyl group-containing compound, and it is preferably no less than 5% by mass of the resin solids. Excess carboxyl groups from component (a) carboxyl group-containing compound cannot react with component (c) epoxy groups, and so component (a) carboxyl group-containing compound that does not have a polymerizable double bond remains unreacted, and may be present in the inventive paint composition. Moreover, if there are excess component (c) epoxy groups with respect to the carboxyl groups of the component (a) carboxyl group-containing compound, the resulting hydroxyl group-containing resin may contain epoxy groups.

Specific examples of the epoxy group-containing radical polymerizable monomer that is component (c) in the inventive hydroxyl group-containing resin include glycidyl acrylate, glycidyl methacrylate, 3,4-epoxycyclohexylmethyl acrylate, 3,4-epoxycyclohexylmethyl methacrylate, and the like. One or more (c) components can be incorporated.
The structural unit based on component (c) is preferably from 10 to 60% by mass, and particularly preferably from 15 to 55% by mass, of the hydroxyl group-containing resin solids content.

In order to obtain a hardened paint film with excellent vehicle wash damage resistance, contamination resistance and acid rain resistance, the hydroxyl value of hydroxyl group-containing resin (A) is from 180 to 400 mgKOH/g, preferably from 200 to 350 mgKOH/g. If the hydroxyl value is less than 180 mgKOH/g, the contamination resistance and acid resistance decrease; if it exceeds 400 mgKOH/g, the miscibility with the crosslinking agent decreases and the external appearance is adversely affected.

The weight average molecular weight of the hydroxyl group-containing resin used in the present invention is from 2000 to 30,000, preferably from 3000 to 15,000. If the weight average molecular weight is less than 2000, mixing of the topcoat paint film and the basecoat occurs readily at the interface when the basecoat and topcoat are applied by the wet-on-wet method, and the external appearance of the paint film is adversely affected; if it exceeds 30,000, the miscibility decreases and the external appearance of the paint film is adversely affected.

Another radical polymerizable monomer, component (d), may be used in the inventive hydroxyl group-containing resin in addition to component (c). Specific examples of other radical polymerizable monomers, component (d), include methyl acrylate, ethyl acrylate, n-propyl acrylate, isopropyl acrylate, n-butyl acrylate, isobutyl acrylate, sec-butyl acrylate, hexyl acrylate, cyclohexyl acrylate, 2-ethylhexyl acrylate, octyl acrylate, lauryl acrylate, stearyl acrylate, methyl methacrylate, ethyl methacrylate, n-propyl methacrylate, isopropyl methacrylate, n-butyl methacrylate, isobutyl methacrylate, sec-butyl methacrylate, hexyl methacrylate, cyclohexyl methacrylate, 2-ethylhexyl methacrylate, octyl methacrylate, lauryl methacrylate, stearyl methacrylate,styrene, acrylonitrile, methacrylonitrile, acrylamide, methacrylamide, and the like. One type of component (d) may be used, or combinations of two or more types may be used.

The structural unit based on component (d) is preferably from 0 to 50% by mass of the hydroxyl group-containing resin solids content, and when component (d) is an indispensable component, the amount contained is particularly preferably from 1 to 40% by mass.
Furthermore, in the present invention, the hydroxyl groups produced by the reaction between component (a) and component (c) and the hydroxyl groups from the hydroxyl group-containing radical polymerizable monomer used as component (d) can be used in the resin composition for hydroxyl group-containing paint, and examples of these hydroxyl group-containing radical polymerizable monomers include 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate, 4-hydroxybutyl methacrylate, allyl alcohol, acrylic acid-glycidyl versatate adduct and methacrylic acid-glycidyl versatate adduct; and adducts of ethyene oxide and/or propylene oxide with (meth)acrylic acid hydroxyalkyl ester such as 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate and 4-hydroxybutyl methacrylate, and the like. One hydroxyl group-containing radical polymerizable monomer can be used, or a combination of two or more can be used.

It should be noted that although ε-caprolactone adducts of the above described (meth)acrylic acid hydroxy-(lower)alkyl esters do contain hydroxyl groups, they are included in the category of lactone compounds, and are not included in the category of component (d) hydroxyl group-containing radical polymerizable monomers in the present invention.
The structural unit based on hydroxyl group-containing radical polymerizable monomer is preferably from 0 to 20% by mass of the hydroxyl group-containing resin solids content.
The lactone compound used as component (b) in the present invention introduces hydroxyl groups into the resin by a ring-opening addition reaction. As a result of this modification of the resin by the lactone, the clear paint composition obtained using the inventive resin composition for paint is such that the hardened paint film has rubber elasticity and good resistance to vehicle wash damage.

Examples of said lactone compounds include β-methyl-δ-valerolactone, γ-valerolactone, 5-valerolactone, δ-caprolactone, γ-caprolactone, ε-caprolactone, β-propiolactone, γ-butyrolactone, γ-nonanoiclactone, and δ-dodecanolactone; ε-caprolactone is particularly preferred. Also, ε-caprolactone adducts of (meth)acrylic acid hydroxy(lower)alkyl esters such as 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate and 4-hydroxybutyl methacrylate may be used. One of these lactone compounds may be used, or a combination of two or more may be used.
The abovementioned lactone compound is used such that the structural unit based on lactone compound is preferably from 20 to 60% by mass, more preferably from 22 to 55% by mass, and particularly preferably from 25 to 50% by mass, of the hydroxyl group-containing resin solids content. If the amount of said structural unit based on the lactone compound exceeds 60% by mass, the resulting hardened paint film becomes too soft and the contamination resistance and acid rain resistance are adversely affected; if it is less than 20% by mass, adequate vehicle wash damage resistance is not achieved.

The method for producing the abovementioned hydroxyl group-containing resin is as follows: (1) when component (a), the compound that contains one carboxyl group and does not have a radical double bond, contains hydroxyl groups, addition of the component (a) hydroxyl groups and the lactone compound is followed by the polymerization, in the presence of the addition compound, of the epoxy group-containing radical polymerizable monomer (c), and, if necessary, another radical polymerizable monomer (d); or (2) the carboxyl groups of the compound that is component (a) are allowed to undergo addition with a polymer comprising epoxy group-containing radical polymerizable monomer (c) and, if necessary, another radical polymerizable monomer (d), then lactone compound is added; or (3) a polymer comprising epoxy group-containing radical polymerizable monomer (c) and, if necessary, another radical polymerizable monomer (d) is produced, then the compound that is component (a) and the lactone compound are allowed to undergo addition, after which the carboxyl groups of the addition compound undergo addition with the polymer, or the addition of the compound that is component (a) and the lactone compound, and the addition of the addition compound carboxyl groups and the polymer, may proceed simultaneously.

When component (a) does not contain hydroxyl groups, (4) the carboxyl groups of the compound that is component (a) are allowed to undergo addition with a polymer comprising epoxy group-containing radical polymerizable monomer (c) and, if necessary, another radical polymerizable monomer (d), then lactone compound is added; or (5) the carboxyl groups of the compound that is component (a) are allowed to undergo addition with epoxy group-containing radical polymerizable monomer (c), then addition and polymerization of the lactone compound and, if necessary, another radical polymerizable monomer (d), may proceed simultaneously.

A radical polymerization initiator may be incorporated when component (c) and, if necessary, component (d), undergo radical polymerization. Examples of the radical polymerization initiator include azo compounds such as 2,2'-azobisisobutyronitrile, 2,2'-azobis-2,4-dimethylvaleronitrile, 4,4'-azobis-4-cyanovaleric acid, 1-azobis-1-cyclohexanecarbonitrile and dimethyl-2,2'-azobisisobutyrate, and organic peroxides such as methyl ethyl ketone peroxide, cyclohexanone peroxide, 3,5,5-trimethylhexanone peroxide, 1,1-bis(t-butylperoxy)-3,3,5-trimethylcyclohexane, 1,1-bis(t-butylperoxy)-cyclohexane, 2,2-bis(t-butylperoxy)octane, t-butyl hydroperoxide, diisopropylbenzene hydroperoxide, dicumyl peroxide, t-butylcumyl peroxide, isobutyl peroxide, lauroyl peroxide, benzoyl peroxide, diisopropyl peroxydicarbonate, t-butyl peroxy-2-ethylhexanoate, t-butyl peroxyneodecanoate, t-butyl peroxylaurate, t-butyl peroxybenzoate, t-butyl peroxy isopropyl carbonate. One radical polymerization initiator may be used individually, or combinations of two or more may be used.

There are no particular limitations regarding the amount of radical polymerization initiator incorporated, and it is preferably from 0.01 to 20% by weight with respect to the total amount of radical polymerizable monomer.
Dimethyl aniline, or a ferrous salt such as ferrous sulfate, ferrous chloride or ferrous acetate, or a reducing agent such as acidic sodium sulfite, sodium thiosulfate or Rongalit, may be incorporated, if necessary, into these radical polymerization initiator systems, although it must be selected with care to ensure that the polymerization temperature does not become too low.
It should be noted that if necessary, in order to promote the reaction between the carboxyl groups of component (a) and the epoxy groups of component (c), one or a plurality of generally known reaction catalysts such as Lewis acids, tertiary amines, ammonium salts and phosphonium salts may be incorporated.

The organic solvent used in the production of the hydroxyl group-containing resin that is component (A) in the present invention preferably does not contain functional groups that react with the carboxyl groups of component (a), or component (b), or the epoxy groups of component (c).
Examples of suitable organic solvents that can be used in the production of component (A) in the present invention include alicyclic hydrocarbons such as cyclohexane and ethylcyclohexane, aromatic hydrocarbon solvents such as toluene, xylene, ethylbenzene and aromatic naphtha, ketone solvents such as acetone, methyl ethyl ketone, methyl isobutyl ketone, cyclohexanone and isophorone, ester solvents such as ethyl acetate, n-butyl acetate, isobutyl acetate, 3-methoxybutyl acetate and bis(2-ethylhexyl) adipate, ether solvents such as dibutyl ether, tetrahydrofuran, 1,4-dioxane and 1,3,5-trioxane, and nitrogen-containing solvents such as acetonitrile, valeronitrile, N,N-dimethylformamide and N,N-diethylformamide. One organic solvent may be used individually, or a mixture of two or more of a plurality of types of organic solvent may be used. At this point, the solids content concentration of the hydroxyl group-containing resin can be carefully chosen such that the dispersion stability of the resin is not adversely affected; the solids content concentration is usually from 10 to 70% by mass.

In the production of the hydroxyl group-containing resin that is component (A), any method may be adopted for adding the organic solvent and the radical polymerization initiator; in order to control the heat of polymerization and the heat of reaction, it is preferable to introduce component (a), or an organic solvent solution thereof, into the reaction vessel with agitation, and to introduce a radical polymerizable monomer that contains component (c), or an organic solvent solution thereof, dropwise from a dropping funnel; or to introduce both component (a), or an organic solvent solution thereof, and radical polymerizable monomer that contains component (c), or an organic solvent solution thereof, dropwise from a dropping funnel. It should be noted that the abovementioned radical polymerizable monomer that contains component (c) may be only the epoxy group-containing radical polymerizable monomer that is component (c), or it may be a mixture of the epoxy group-containing radical polymerizable monomer that is component (c) and another radical polymerizable monomer that is component (d).

The polymerization temperature of the abovementioned polymerization reaction depends on the type of radical polymerization initiator, whether or not a reducing agent is used, and whether or not a carboxyl group-epoxy group reaction catalyst is used, and is preferably from 50 to 200°C, and more preferably from 80 to 160°C. If the polymerization temperature is less than 50°C, the reaction between the carboxyl groups of component (a) and the epoxy groups of component (c) does not proceed sufficiently and phase separation occurs readily between the radical polymerizable monomer and the hydroxyl group-containing resin. If it exceeds 200°C, there are unwanted side reactions such as depolymerization.

In the present invention, the crosslinking agent that is component (B) has per molecule two or more, preferably three or more, functional groups that react with hydroxyl groups, and examples include melamine resins and isocyanate compounds having per molecule two or more, preferably three or more, functional groups such as isocyanate groups and blocked isocyanate groups; one may be used individually, or a combination of two or more may be used.

Examples of polyisocyanate compounds having two or more isocyanate groups per molecule include p-phenylene diisocyanate, biphenyl diisocyanate, tolylene diisocyanate, 3,3'-dimethyl-4,4'-biphenylene diisocyanate, 1,4-tetramethylene diisocyanate, hexamethylene diisocyanate, 2,2,4-trimethyl hexane-1,6-diisocyanate, methylene bis(phenylisocyanate), lysine methyl ester diisocyanate, bis(isocyanate ethyl)fumarate, isophorone diisocyanate, methylcyclohexyl diisocyanate and 2-isocyanate ethyl-2,6-diisocyanate hexanoate, and biuret forms and isocyanurate forms thereof.

Blocked isocyanate compounds obtained by subjecting polyisocyanate compounds having two or more isocyanate groups per molecule, such as hexamethylene diisocyanate, phenylene diisocyanate, xylylene diisocyanate and isophorone diisocyanate, to blocking using an active methylene-based or oxime-based blocking agent such as methyl acetoacetate or dimethyl malonate, can be used as the isocyanate compounds having blocked isocyanate groups.
Melamine resins that have been converted to the alkyl ether form are preferable as the melamine resin, and methylolated amino resins obtained by reacting melamine and aldehyde are examples. Formaldehyde, paraformaldehyde, acetaldehyde, benzaldehyde or the like can be used as the aldehyde. The methylolated amino resins that have been converted to ether using one or more lower alcohols can be used, and examples of alcohols that can be used for the conversion to ether include monohydric alcohols such as methyl alcohol, ethyl alcohol, n-propyl alcohol, isopropyl alcohol, n-butyl alcohol, isobutyl alcohol, 2-ethylbutanol and 2-ethylhexanol. Of these, methylolated melamine resin, and melamine resins obtained by converting at least some of the methylol groups of a methylolated melamine resin to ether using a monohydric alcohol of from 1 to 4 carbon atoms, are suitable.
Commercially available examples of the abovementioned melamine resins include butyl ether-converted melamine resins such as Yuban 20SE-60 and Yuban 225 (trade names; both manufactured by Mitsui Kagaku (K.K.)), and Superbecamine G840 and Superbecamine G821 (trade names, both manufactured by Dai Nippon Ink Kagaku Kogyo (K.K.)), and methyl ether-converted melamine resins such as Sumimarl M-100, Sumimarl M-40S and Sumimarl M-55 (trade names, all manufactured by Sumitomo Kagaku (K.K.)), and Saimel 303, Saimel 325, Saimel 350 and Saimel 370 (trade names, all manufactured by Nippon Saitech Industries (K.K.)).
The proportion of crosslinking agent in the inventive paint composition is preferably from 20 to 80% by mass, and more preferably from 30 to 70% by mass, in the resin solids content of the paint. If the proportion of crosslinking agent is less than 20% by mass, the crosslinking density is insufficient and the resulting paint film has poor water resistance and contamination resistance, and if it exceeds 80% by mass, unreacted crosslinking agent remains in the paint film and the hardness of the paint film decreases.

The inventive paint composition can be used without further modification, or, if necessary, it can be used after the addition of an organic solvent and/or one or more additives such as UV absorber, photostabiliser, antioxidant, surfactant, surface regulator, hardening reaction catalyst, static preventer, perfume, dehydrating agent, and rheology regulators such as polyethylene wax, polyamide wax and internally crosslinking resin microparticles.
The inventive paint composition may be used as clear paint, or colorant such as dye or pigment may be incorporated, whereupon it may be used as colored paint.

The inventive paint composition is preferably used as a topcoat paint composition.
Examples of the inventive topcoat paint painting and finishing method include a 2-coat-1-bake painting and finishing method whereby colored basecoat is painted onto a substrate, then the uncrosslinked inventive paint composition is applied without further modification as a topcoat paint; an overcoat painting and finishing method whereby colored basecoat is painted onto a substrate, uncrosslinked middle-coat paint is applied without further modification, the system is baked at the same time, then the inventive paint composition is applied as overcoat paint and the resulting system is baked; and a painting and finishing method whereby in the abovementioned overcoat painting and finishing method, primer paint is applied in order to guarantee tight adhesion with the undercoat, and uncrosslinked inventive paint composition is applied without further modification as overcoat paint.

The abovementioned colored basecoat paint, middle-coat paint, topcoat paint, overcoat paint and primer paint may be warmed if necessary, and after adjustment to the desired viscosity by the addition of an organic solvent or reactive diluent, it can be applied by means of a commonly used painting device such as an air spray, electrostatic air spray, roller coater or flow coater, or a device that applies paint by dipping, or by using a brush, bar coater, applicator or the like. Of these methods, spray-painting is preferred.
The amount of inventive paint composition applied is preferably such that the dry film thickness is usually from 10 to 100 µm. The paint film obtained when the inventive paint composition is applied is preferably subjected to ordinary baking.

Moreover, organic materials and inorganic materials such as wood, glass, metal, fabric, plastic, foam, elastic material, paper, ceramic, concrete and gypsum board can be used as the substrate for the application of the inventive paint composition. The substrate may be surface-treated beforehand, or a paint film may already be formed on the surface.
Specific examples have been given, although the inventive paint composition painting and finishing method is in no way limited to these examples.

Examples of painted articles obtained using the inventive paint composition include structural material, wooden articles, metal articles, plastic articles, rubber articles, processed paper, ceramic articles and glass articles. More specifically, examples include automobiles and automobile parts (for example, parts such as bodies, bumpers, spoilers, mirrors, foils and internal parts, etc., of various materials), metal plates such as steel plates, bicycles and bicycle parts, road products (such as guard rails, traffic signs, soundproof walls, etc.), tunnel products (such as side wall plates, etc.), ships, railway carriages, aircraft, furniture, musical instruments, household electrical products, building materials, containers, office supplies, sports products, toys, and the like.

### [Working examples]

The present invention is described in detail below by means of working examples, but the present invention is in no way limited to these working examples. It should be noted that the performance of the paint films obtained using the inventive clear paint composition was determined as follows.

### (1) External appearance

Observed visually and appraised using the following criteria.
○: When a fluorescent lamp is shone on the paint film, the fluorescent lamp is reflected clearly.
Δ: When a fluorescent lamp is shone on the paint film, the circumference (outline) of the fluorescent lamp is slightly blurred.
×: When a fluorescent lamp is shone on the paint film, the circumference (outline) of the fluorescent lamp is very blurred.

### (2) Cloudiness of the paint

Observed visually and appraised using the following criteria.
o: No cloudiness observed
Δ: Slight cloudiness observed
x: Cloudy

### (3) Resistance to vehicle wash damage

Scratch resistance: a test plate was painted with muddy water (JIS Z-8901-84; type 8 dust/water/neutral detergent = 10/99/1 weight ratio mixture) using a brush, then the test plate was washed under a flow of water using a vehicle wash device with a vehicle washing brush rotating at 150 rpm for 10 seconds. This operation was repeated 10 times, then the extent of any scratch damage on the surface of the test plate was measured in terms of the L* value, using a color difference meter (CR-331, manufactured by Minolta Cameras (K.K.). The lower the numerical value the better.

### (4) Acid resistance

Acid resistance: 0.2 ml of aqueous 40% sulfuric acid solution was spotted onto a test plate, which was then heated at 60°C for 15 minutes, then washed with water; the staining was observed visually.
O: Almost no change to the paint film seen
Δ: Slight water staining seen
x: Marked water staining seen

### (5) Contamination resistance

Contaminated water (JIS Z-8901-84; type 8 dust/water/carbon black/yellow ochre = 1.3/98/0.5/0.2 weight ratio mixture) was painted onto a test plate, which was then dried at 50°C for 10 minutes; 8 cycles were performed, then the paint film was cleaned using a polishing cloth with a steady force under a flow of water, and the residual contamination was observed visually and appraised using the following criteria.
O: No contamination
Δ: Some contamination remaining
x: Completely contaminated

### (6) Water resistance

After three months of outdoor exposure based on JIS K-5400 (1990) 9.9 weather resistance, the color of the unwashed surface of the paint film was measured according to the JIS K-5400 (1990) 7.4.2 paint film color-measuring method, and the ΔL* value was found by subtracting the pre-test L* value from the L* value obtained after the test piece had been immersed in warm water at 40°C for 240 hours, and the whitening of the paint film was appraised. The smaller the numerical value the better.

### (7) Weather resistance

A paint film was exposed for 3000 hours using a sunshine carbon arc lamp-type weather resistance test device (JIS K-5400 (1990) 9.8.1), then the state of the paint film was appraised visually.

### Production example 1

### Production of hydroxyl group-containing resin solution A-1

60 parts by mass of xylene were introduced into a 4-necked flask provided with a thermometer, reflux condenser, agitator and dropping funnel, and heated and kept at 140°C, with agitation, under a current of nitrogen. Next, at a temperature of 140°C, a mixture comprising 22 parts by mass of glycidyl methacrylate, 10 parts by mass of n-butyl acrylate, 19 parts by mass of n-butyl methacrylate and 4 parts by mass of the polymerization initiator t-butylperoxy 2-ethylhexanoate was added dropwise at a constant rate over a period of 2 hours using the dropping funnel. After completion of the dropwise addition, the temperature was kept at 140°C for 1 hour, then the reaction temperature was lowered to 110°C. Polymerization initiator solution (additional catalyst) comprising 0.2 parts by mass of t-butylperoxy 2-ethyl-hexanoate dissolved in 2 parts by mass of xylene was then added, the system was kept at 110°C for 2 hours, then 23 parts by mass of 2,2-dimethylol butanoic acid, 26 parts by mass of ε-caprolactone and 2.5 parts by mass of xylene were added, and the system was kept at 150°C for 3 hours, whereupon the reaction was completed; this yielded hydroxyl group-containing resin solution A-1. The hydroxyl value was 251, the non-volatile component was 61.8% and the weight average molecular weight was 7500.

### Production examples 2 to 12

### Production of hydroxyl group-containing resin solutions A-2 to A-12

Hydroxyl group-containing resin solutions A-2 to A-12 were obtained as in production example 1, except that the monomer compositions were as disclosed in Table 1 and Table 2. The properties of the resin solutions are shown in Table 1 and Table 2.

**[Table 1]**

| Production example | | | 1 | 2 | 3 | 4 | 5 | 6 |
|---|---|---|---|---|---|---|---|---|
| Hydroxyl group-containing resin solution | | | A-1 | A-2 | A-3 | A-4 | A-5 | A-6 |
| First introduced | | Xylene | 60 | 60 | 60 | 60 | 60 | 60 |
| Components added dropwise | (c) | Glycidyl methacrylate | 22 | 49 | 30 | 23 | 23 | 23 |
| | (d) | n-butyl acrylate | 10 | - | - | 10 | - | 16 |
| | | n-butyl methacrylate | 19 | - | 13 | 20 | 6 | 25 |
| | | 2-hydroxyethyl methacrylate | - | - | - | - | - | - |
| | | t-butylperoxy 2-ethyl-hexanoate | 4 | 4 | 4 | 4 | 4 | 4 |
| Additional catalyst | | t-butylperoxy 2-ethyl-hexanoate | 0.2 | 0.2 | 0.2 | 0.2 | 0.2 | 0.2 |
| | | Xylene | 2 | 2 | 2 | 2 | 2 | 2 |
| Additional components | (a) | Propionic acid | - | 25 | - | - | - | - |
| | | 2,2-dimethylol butanoic acid | 23 | - | 31 | - | - | - |
| | | 2,2-dimethylol propionic acid | - | - | - | 21 | 21 | 21 |
| | (b) | ε-caprolactone | 26 | 26 | 26 | 26 | 50 | 15 |
| | | Xylene | 2.5 | 2.5 | 2.5 | 2.5 | 2.5 | 2.5 |
| Total | | | 168.7 | 168.7 | 168.7 | 168.7 | 168.7 | 168.7 |
| Hydroxyl value of the hydroxyl group-containing resin (mgKOH/g) | | | 251 | 182 | 338 | 253 | 253 | 253 |
| Resin solids content (% by mass) | | | 61.8 | 61.8 | 61.8 | 61.8 | 61.8 | 61.8 |
| Weight average molecular weight of the hydroxyl group-containing resin | | | 7500 | 6200 | 9200 | 7200 | 8000 | 7000 |
| Proportion of (b) component in the resin solids content | | | 25.0 | 25.0 | 25.0 0 | 25.0 | 48.0 | 14.4 |

**[Table 2]**

| Production example | | | 7 | 8 | 9 | 10 | 11 | 12 |
|---|---|---|---|---|---|---|---|---|
| Hydroxyl group-containing resin solution | | | A-7 | A-8 | A-9 | A-10 | A-11 | A-12 |
| First introduced | | Xylene | 60 | 60 | 60 | 60 | 60 | 60 |
| Components added dropwise | (c) | Glycidyl methacrylate | 18 | 19 | 36 | 25 | 25 | - |
| | (d) | n-butyl acrylate | - | 18 | - | 11 | 11 | 10 |
| | | n-butyl methacrylate | - | 23 | 4 | 15 | 15 | 20 |
| | | 2-hydroxyethyl methacrylate | - | - | - | - | - | 44 |
| | | t-butylperoxy 2-ethyl-hexanoate | 4 | 4 | 4 | 12 | 0.5 | 4 |
| Additional catalyst | | t-butylperoxy 2-ethyl-hexanoate | 0.2 | 0.2 | 0.2 | 0.2 | 0.2 | 0.2 |
| | | Xylene | 2 | 2 | 2 | 2 | 2 | 2 |
| Additional components | (a) | Propionic acid | - | - | - | - | - | - |
| | | 2,2-dimethylol butanoic acid | - | - | - | - | - | - |
| | | 2,2-dimethylol propionic acid | 17 | 14 | 34 | 23 | 23 | - |
| | (b) | ε-caprolactone | 65 | 26 | 26 | 26 | 26 | 26 |
| | | Xylene | 2.5 | 2.5 | 2.5 | 2.5 | 2.5 | 2.5 |
| Total | | | 168.7 | 168.7 | 168.7 | 176.7 | 165.2 | 168.7 |
| Hydroxyl value of the hydroxyl group-containing resin (mgKOH/g) | | | 205 | 169 | 410 | 258 | 287 | 182 |
| Resin solids content (% by mass) | | | 61.8 | 61.8 | 61.8 | 63.5 | 61.0 | 61.8 |
| Weight average molecular weight of the hydroxyl group-containing resin | | | 9200 | 6800 | 9800 | 1800 | 33000 | 8000 |
| Proportion of (b) component in the resin solids content | | | 64.2 | 25.0 | 25.0 | 23.2 | 25.8 | 25.0 |

### Working examples 1 to 7

### Production of clear paints CC-1 to 7

The starting materials disclosed in Table 3 were mixed successively and agitated until homogeneous, to obtain clear paints CC-1 to CC-7.

**[Table 3]**

| Working example | | | 1 | 2 | 3 | 4 | 5 | 6 | 7 |
|---|---|---|---|---|---|---|---|---|---|
| Clear paint composition | | | CC-1 | CC-2 | CC-3 | CC-4 | CC-5 | CC-6 | CC-7 |
| Hydroxyl group-containing resin solution | A-1 | | 100 | - | 100 | 100 | - | - | - |
| | A-2 | | - | 100 | - | - | - | - | - |
| | A-3 | | - | - | - | - | 100 | - | - |
| | A-4 | | - | - | - | - | - | 100 | - |
| | A-5 | | - | - | - | - | - | - | 100 |
| Crosslinking agent | Desmodule N3200 | 1) | 60 | 35 | 60 | - | 90 | 60 | 60 |
| | Yuban SE-60 | 2) | - | - | 20 | 50 | - | - | - |
| UV absorber solution | | 3) | 7 | 7 | 7 | 7 | 7 | 7 | 7 |
| Photostabilizer solution | | 4) | 7 | 7 | 7 | 7 | 7 | 7 | 7 |
| Surface regulator solution | | 5) | 2 | 2 | 2 | 2 | 2 | 2 | 2 |
| Solvesso 100 | | 6) | 15 | 15 | 15 | 15 | 15 | 15 | 15 |
| Total | | | 191 | 166 | 211 | 181 | 221 | 191 | 191 |
| Hydroxyl group-containing resin solids content(parts by mass) | | | 61.8 | 61.8 | 61.8 | 62.8 | 61.8 | 61.8 | 61.8 |
| Crosslinking agent solids content (parts by mass) | | | 60 | 35 | 72 | 30 | 90 | 60 | 60 |
| Proportion of crosslinking agent in the resin solids content (% by mass) | | | 49.3 | 36.2 | 53.8 | 32.3 | 59.3 | 49.3 | 49.3 |

Notes for Table 3 and Table 5
1) Yuban 20ES-60: trade name, manufactured by Mitsui Kagaku (K.K.), melamine resin solution (non-volatile components 60% by mass)
2) Desmodule N3200: trade name, manufactured by Sumitomo Bayer Urethane (K.K.), liquid HDI biuret-type resin (non-volatile components 100% by mass, NCO content 23% by mass)
3) Tinuvin 900: UV absorber, trade name, manufactured by Ciba Speciality Chemicals, 20% by mass xylene solution
4) Tinuvin 292: photostabilizer, trade name, manufactured by Ciba Speciality Chemicals, 20% by mass xylene solution
5) BYK-300: surface regulator, trade name, manufactured by BYK-Chemie, 10% by mass xylene solution
6) Solvesso 100: trade name, manufactured by Esso, aromatic petroleum naphtha

### Working example 1

### Preparation of test samples and evaluation of the paint film performance

Cationic electrodeposition paint Aqua no. 4200 (trade name, manufactured by Nippon Yushi BASF Coatings (K.K.)) was coated by electrodeposition onto a zinc phosphate-treated soft steel plate to a dry film thickness of 20 µm and baked at 175°C for 25 minutes, then middle-coat paint HS-H300 (trade name, manufactured by Nippon Yushi BASF Coatings (K.K.)) was applied by air-spraying to a dry film thickness of 30 µm, and the system was baked at 140°C for 30 minutes. Next, solvent-based basecoat paint "Belcoat" no. 6000 black (trade name, manufactured by Nippon Yushi BASF Coatings (K.K.), paint color: black) was applied by air-spraying to a dry film thickness of 15 µm and set at 20°C for 3 minutes, then clear paint CC-1 that had been diluted to a painting viscosity (Ford cup no. 4, 20°C, 25 s) using Solvesso 100 (trade name, manufactured by Esso, aromatic petroleum naphtha) was applied according to the wet-on-wet method by air-spraying to a dry film thickness of 40 µm, and the resulting system was baked at 140°C for 30 minutes, to obtain test samples. For the contamination resistance test sample only, "Belcoat" no. 6000 white (trade name, manufactured by Nippon Yushi BASF Coatings (K.K.), paint color: white) was used as the basecoat paint.
Paint film performance is shown in Table 4; vehicle wash damage resistance, acid resistance, water resistance, contamination resistance and weather resistance were excellent, there was no clouding of the paint, and a paint film of uniform luster was obtained.

### Working examples 2 to 7

### Preparation of test samples and evaluation of the paint film performance

Test samples were prepared as in working example 1, except that clear paints CC-2 to 6 were used; the performance of the paint films was appraised. The performance of the paint films is shown Table 4. Vehicle wash damage resistance, acid resistance, water resistance, contamination resistance and weather resistance were excellent, there was no clouding of the paints, and paint films of uniform luster were obtained.

**[Table 4]**

| Working example | 1 | 2 | 3 | 4 | 5 | 6 | 7 |
|---|---|---|---|---|---|---|---|
| Clear paint composition | CC-1 | CC-2 | CC-3 | CC-4 | CC-5 | CC-6 | CC-7 |
| External appearance | ○ | ○ | ○ | ○ | ○ | ○ | ○ |
| Paint cloudiness | ○ | ○ | ○ | ○ | ○ | ○ | ○ |
| Vehicle wash damage resistance | 1.2 | 3.1 | 2.1 | 3.3 | 1.1 | 1.2 | 0.2 |
| Acid resistance | ○ | ○ | ○ | ○ | ○ | ○ | ○ |
| Contamination resistance | ○ | ○ | ○ | ○ | ○ | ○ | ○ |
| Water resistance | 0.2 | 0.2 | 0.2 | 0.2 | 0.2 | 0.2 | 0.2 |
| Weather resistance | Nothing unusual | Nothing unusual | Nothing unusual | Nothing unusual | Nothing unusual | Nothing unusual | Nothing unusual |

### Comparative examples 1 to 7

### Production of clear paints CC-8 to 14

The starting materials disclosed in Table 5 were mixed successively and agitated until homogeneous, to obtain clear paints CC-8 to CC-14.

### Preparation of test samples and evaluation of the paint

### film performance

Test samples were prepared as in working example 1, except that paint compositions CC-8 to 14 were used instead of CC-1; the performance of the paint films was appraised.
The performance of paint films is shown in Table 6; in comparative example 1, adequate resistance to vehicle wash damage was not achieved, and in comparative example 2 and comparative example 3, the contamination resistance and acid resistance were inferior. In comparative examples 4 to 7, the external appearance was poor, and in comparative examples 4, 6 and 7, the paint was cloudy.

**[Table 5]**

| Comparative example | | | 1 | 2 | 3 | 4 | 5 | 6 | 7 |
|---|---|---|---|---|---|---|---|---|---|
| Clear paint composition | | | CC-8 | CC-9 | CC-10 | CC-11 | CC-12 | CC-13 | CC-14 |
| Hydroxyl group- containing resin solution | A-6 | | 100 | - | - | - | - | - | - |
| | A-7 | | - | 100 | - | - | - | - | - |
| | A-8 | | - | - | 100 | - | - | - | - |
| | A-9 | | - | - | - | 100 | - | - | - |
| | A-10 | | - | - | - | - | 100 | - | - |
| | A-11 | | - | - | - | - | - | 100 | - |
| | A-12 | | - | - | - | - | - | - | 100 |
| Crosslinking agent | Desmodule N3200 | 1) | 60 | 40 | 30 | 90 | 60 | 60 | 35 |
| | Yuban SE-60 | 2) | - | - | - | - | - | - | - |
| UV absorber solution | | 3) | 7 | 7 | 7 | 7 | 7 | 7 | 7 |
| Photostabilizer solution | | 4) | 7 | 7 | 7 | 7 | 7 | 7 | 7 |
| Surface regulator solution | | 5) | 2 | 2 | 2 | 2 | 2 | 2 | 2 |
| Solvesso 100 | | 6) | 15 | 15 | 15 | 15 | 15 | 15 | 15 |
| Total | | | 191 | 171 | 161 | 221 | 191 | 191 | 166 |
| Hydroxyl group-containing resin solids content(parts by mass) | | | 61.8 | 61.8 | 61.8 | 61.8 | 63.5 | 61 | 61.8 |
| Crosslinking agent solids content (parts by mass) | | | 60 | 40 | 30 | 90 | 60 | 60 | 35 |
| Proportion of crosslinking agent in the resin solids content (% by mass) | | | 49.3 | 39.3 | 32.7 | 59.3 | 48.6 | 49.6 | 36.2 |

**[Table 6]**

| Comparative example | 1 | 2 | 3 | 4 | 5 | 6 | 7 |
|---|---|---|---|---|---|---|---|
| Clear paint composition | CC-8 | CC-9 | CC-10 | CC-11 | CC-12 | CC-13 | CC-14 |
| External appearance | ○ | ○ | ○ | × | × | × | × |
| Paint cloudiness | ○ | ○ | ○ | × | ○ | × | × |
| Vehicle wash damage resistance | 23 | 0.3 | 1.2 | - | - | - | - |
| Acid resistance | ○ | × | Δ | - | - | - | - |
| Contamination resistance | ○ | × | Δ | - | - | - | - |
| Water resistance | 0.2 | 2.1 | 1.1 | - | - | - | - |
| Weather resistance | Nothing unusual | Decreased luster | Nothing unusual | - | - | - | - |

### [Industrial use]

The inventive paint composition can be used in various painting fields, and is particularly useful in the field of automobile painting.

## Claims

1. A paint composition, **characterized in that** it has as indispensable components (A) a hydroxyl group-containing resin that is obtained by the addition and polymerization of (a) a compound that contains one carboxyl group and does not have a radical polymerizable double bond, (b) a lactone compound, and (c) an epoxy group-containing radical polymerizable monomer, and which has a resin hydroxyl value of from 180 to 400 mgKOH/g and a weight average molecular weight of from 2000 to 30,000, and in which the structural unit based on the lactone compound component (b) is from 20 to 60% by mass of the resin solids content; and (B) a crosslinking agent containing per molecule at least two functional groups that react with hydroxyl groups.

2. The paint composition as claimed in claim 1, **characterized in that** the hydroxyl group-containing resin is obtained by the addition and copolymerization of component (a), component (b), component (c), and another radical polymerizable monomer (d).

3. The paint composition as claimed in claim 1 or 2, **characterized in that** the compound (a) that contains one carboxyl group and does not have a radical polymerizable double bond is 2,2-dimethylol butanoic acid or 2,2-dimethylol propionic acid.

4. The paint composition as claimed in any of claims 1 to 3, **characterized in that** the crosslinking agent (B) is a melamine resin and/or isocyanate compound.

5. A painting and finishing method, **characterized in that** a paint composition according to any of claims 1 to 4 is applied as the topcoat paint.

6. Painted articles that have been painted by the painting and finishing method of claim 5.

## Patentansprüche

1. Lackzusammensetzung, **dadurch gekennzeichnet, daß** sie als unbedingt erforderliche Komponenten (A) ein hydroxylgruppenhaltiges Harz, das durch Addition und Polymerisation (a) einer Verbindung, die eine Carboxylgruppe enthält und keine radikalisch polymerisierbare Doppelbindung aufweist, (b) einer Lactonverbindung und (c) eines epoxidgruppenhaltigen radikalisch polymerisierbaren Monomers erhalten wird und eine Harz-Hydroxylzahl von 180 bis 400 mg KOH/g und ein gewichtsmittleres Molekulargewicht von 2000 bis 30.000 aufweist und in dem die auf der Lactonverbindungskomponente (b) basierende Struktureinheit 20 bis 60 Massenprozent des Harzfeststoffgehalts ausmacht, und (B) einen Vernetzer, der pro Molekül mindestens zwei funktionelle Gruppen, die mit Hydroxylgruppen reagieren, enthält, enthält.

2. Lackzusammensetzung nach Anspruch 1, **dadurch gekennzeichnet, daß** das hydroxylgruppenhaltige Harz durch Addition und Copolymerisation von Komponente (a), Komponente (b), Komponente (c) und einem anderen radikalisch polymerisierbaren Monomer (d) erhalten wird.

3. Lackzusammensetzung nach Anspruch 1 oder 2, **dadurch gekennzeichnet, daß** es sich bei der Verbindung (a), die eine Carboxylgruppe enthält und keine radikalisch polymerisierbare Doppelbindung aufweist, um 2,2-Dimethylolbutansäure oder 2,2-Dimethylolpropionsäure handelt.

4. Lackzusammensetzung nach einem der Ansprüche 1 bis 3, **dadurch gekennzeichnet, daß** es sich bei dem Vernetzer (B) um ein Melaminharz und/oder eine Isocyanatverbindung handelt.

5. Lackier- und Endbearbeitungsverfahren, **dadurch gekennzeichnet, daß** man eine Lackzusammensetzung nach einem der Ansprüche 1 bis 4 als Decklack aufbringt.

6. Lackierte Gegenstände, die nach dem Lackier- und Endbearbeitungsverfahren von Anspruch 5 lackiert worden sind.

## Revendications

1. Composition de peinture **caractérisée en ce qu'**elle comprend, en tant que constituants essentiels, (A) une résine qui contient des groupes hydroxyle, laquelle résine est obtenue par l'ajout et la polymérisation (a) d'un composé qui comprend un groupe carboxyle et qui ne possède pas de double liaison polymérisable par voie radicalaire, (b) d'un composé lactone et (c) d'un monomère polymérisable par voie radicalaire qui comprend un groupe époxy, et lequel monomère présente un indice d'hydroxyle de résine allant de 180 à 400 mg de KOH/g et un poids moléculaire moyen en poids allant de 2000 à 30 000, et dans laquelle le motif structural basé sur le composant lactone (b) constitue de 20 à 60 % en masse de la teneur en solides de la résine, et (B) un agent de réticulation qui comprend, par molécule, au moins deux groupes fonctionnels qui réagissent avec les groupes hydroxyle.

2. Composition de peinture selon la revendication 1, **caractérisée en ce qu'**on obtient la résine contenant des groupes hydroxyle par l'ajout et la polymérisation du composant (a), du composant (b), du composant (c) et d'un autre monomère polymérisable par voie radicalaire (d).

3. Composition de peinture selon la revendication 1 ou 2, **caractérisée en ce que** le composé (a) qui contient un groupe carboxyle et qui ne possède pas une liaison double polymérisable par voie radicalaire est l'acide 2,2-diméthylol butanoïque ou l'acide 2,2-diméthylol propionique.

4. Composition de peinture selon l'une quelconque des revendications 1 à 3, **caractérisée en ce que** l'agent de réticulation (B) est une résine de mélamine et/ou un composé d'isocyanate.

5. Procédé de peinture ou de finition, **caractérisé en ce que** la composition de peinture selon l'une quelconque des revendications 1 à 4 est appliquée comme une peinture de finition.

6. Articles peints qui ont été peints par le procédé de peinture et de finition de la revendication 5.
